# EUROPEAN PATENT APPLICATION

(11) **EP 2 540 962 A2**
(43) Date of publication of application: **02.01.2013**
(21) Application number: 12173061.8
(22) Date of filing: 21.06.2012
(51) Int. Cl.: F01D 5/00, F01D 9/04

(54) **Method for forming nozzle segments**

(30) Priority: 28.06.2011 US 201113170566
(71) Applicant: United Technologies Corporation, Hartford, CT 06101 (US)
(72) Inventor: Perret, Edmundo Jesus, Grand Prairie, TX Texas 75053-5728 (US); Minor, Michael J., Arlington, TX Texas 76018 (US); Miller, Michael L., Euless, TX Texas 76039 (US); Brenton, Stanley B., Mission, TX Texas 78572 (US)
(74) Representative: Tomlinson, Kerry John

(57) **Abstract**

A method for forming a nozzle segment (20) for a turbine stage of a gas turbine engine to a specific measurement range for a throat area. The nozzle segment comprising an inner platform (22), and outer platform (24), and a plurality of airfoils (26) between the inner platform and outer platform. A requested throat area measurement is obtained for the nozzle segment, and a starting stacking angle for a plurality of through holes and pockets corresponding to the airfoils for both the inner platform and outer platform is selected, which are then machined. The airfoils, inner platform, and outer platform are assembled to form the nozzle segment that is machined to obtain a finished throat area. The finished throat area is measured, and a determination is made if the measured finish throat area complies with the requested throat area.

## Description

### BACKGROUND

The present invention relates to manufacturing of vane assembly components of gas turbine engines, as well as articles resulting from repairs.

Gas turbine engines often include a vane nozzle assembly that comprises a plurality of vane segments secured in an annular configuration. Each vane segment can include one or more airfoils positioned in a primary engine gaspath between opposite inner and outer platform structures. These vane segments can also include cooling features, such as film cooling openings and cooling baffles that extend into the airfoils. During operation, the vane segments can become worn, damaged, or otherwise in need of repair or replacement. These components are also costly to assemble. It is desirable to help minimize costs associated with repair or replacement of vane segments. As a result, it is desired to be able to efficiently repair the damage such that as much of the original materials as possible can be reused.

Conventional airfoil replacement repair procedures involve separating the platforms by cutting the airfoils therefrom. This procedure retains a stub on each platform where the airfoils are cut out. The replacement airfoils may then be welded to the stubs using welding techniques. Because the new airfoils must be positioned on the existing stubs, the positioning of the new airfoils is restricted. Also, because airfoil stubs are retained, complete refurbishment of the platform gaspath surfaces by an automated process is not possible. The irregularly contoured stub protruding from each platform requires that brazing and contouring of the platforms be done by hand. It is desirable, however, to automate as many refurbishment operations as possible in order to minimize repair prices and time.

Another airfoil replacement procedure has been applied to high pressure turbine vanes that were originally created as component assemblies as described above, in which the airfoil castings are brazed into pockets in the separately cast platforms. When repairing a component assembly vane, the entire assembly can be heated to a temperature sufficient to melt the brazed joint, allowing the components to be pulled apart. Alternatively, the airfoil can be cut from the platforms, followed by subsequent machining operations to restore the platform pocket. However, using either procedure, the replacement airfoil is limited to placement within the existing pocket in the platform, thereby preventing the relocation of airfoils, i.e. class size alteration, or the use of airfoils which are of a different size from the original. The position of the airfoils within the segment will determine a throat area.

The vane segments in a gas turbine engine operate with a throat area range consisting of a low end designated by a lower specification limit (LSL) and a high end designated by a higher specification limit (HSL). The operators of the engine may request the throat area closer to either the LSL or HSL for such reasons as an avoidance of reducing exhaust gas temperature margins to increase the operating life of the vane nozzle assembly. Current repair methods do not repeatedly produce nozzle segments of a specified throat area. Accordingly, there is a need to improve the accuracy of throat area within the desired range between the LSL and HSL. For example, consider a high-pressure turbine stage that contains twenty-three nozzle segments, and at least one of the nozzle segments is to be replaced. The nozzle flow area of the set is determined, the measurements of all segments are added together to obtain the nozzle flow area, and the value is compared to the LSL and HSL. If the total nozzle area is not within the required limits, then the nozzle segment(s) are replaced with other nozzle segments until the total nozzle flow area is within the required limits.

### SUMMARY

A method for forming a nozzle segment for a turbine stage of a gas turbine engine to a specific measurement range for a throat area is disclosed. The nozzle segment has an inner platform, and outer platform, and a plurality of airfoils between the inner platform and outer platform. A requested throat area measurement is obtained for the nozzle segment, and a starting stacking angle for a plurality of through holes and pockets corresponding to the airfoils for both the inner platform and outer platform is selected, and the platforms are then machined. The airfoils, inner platform, and outer platform are assembled to form a vane segment that is machined to obtain a finished throat area. The finished throat area is measured, and a determination is made if the measured finish throat area complies with the requested throat area.

In another embodiment, a method for forming a nozzle stage is disclosed. At least one nozzle segment of the nozzle stage is replaced with a replacement nozzle segment comprising an inner platform, and outer platform, and a plurality of airfoils between the inner platform and outer platform. The replacement nozzle segment is manufactured by the aforementioned method.

In yet another embodiment, a replacement nozzle vane segment for a gas turbine engine is disclosed. The replacement nozzle vane segment is a non-engine run manufacturing component with an inner platform, an outer platform, and a plurality of airfoils extending between the inner and outer platform. The plurality of airfoils form a throat area that has a measurement that meets a first criteria different from a second criteria of a nozzle vane segment that is being replaced.
Certain preferred embodiments will now be described by way of example only and with reference to the accompanying drawings.

### BRIEF DESCRIPTION OF THE DRAWINGS

FIG. 1 is an exploded perspective view of a vane segment for use in a gas turbine engine.

FIG. 2 is a plan view of a vane platform with pockets cut therein.

FIG. 3 is a plan view of a replacement airfoil.

FIG. 4 is a perspective view of a remanufactured turbine vane.

FIG. 5 is a flow chart of a method for replacing a vane segment that has been removed from a gas turbine engine and replaced to meet a desired throat area.

### DETAILED DESCRIPTION

During use, vane segments for vane nozzle assemblies of gas turbine engines can become worn, damaged, or otherwise in need of repair or replacement. The present disclosure provides a repair or replacement for vane assembly components of gas turbine engines, as well as an article resulting from such a repair or replacement. More particularly, the disclosure provides a replacement for the high pressure turbine nozzle by allowing for selective nozzle segment arrangements for a requested throat area. The process includes selecting, machining, and joining investment castings followed by a throat area measurement to determine the position of the airfoils in the nozzle segment.

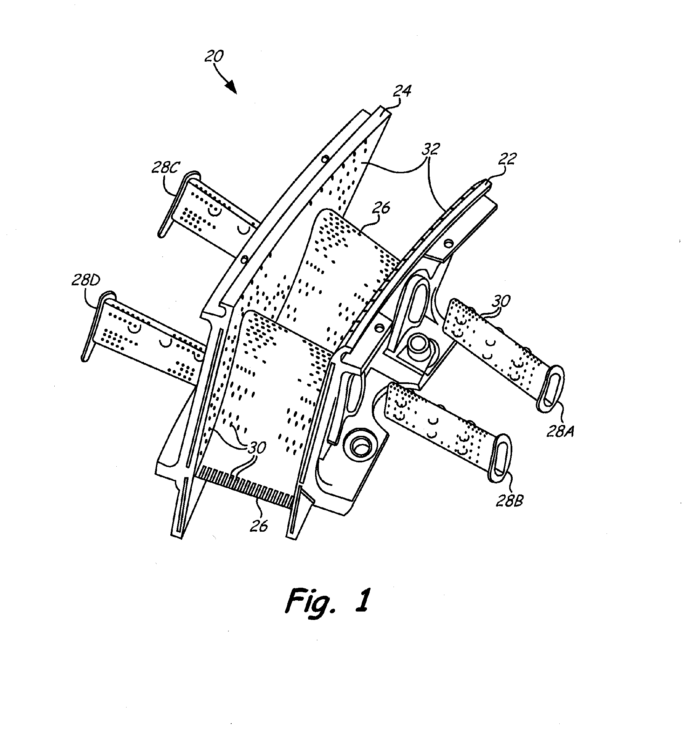

FIG. 1 is an exploded perspective view of a vane segment 20 for use in a gas turbine engine. Vane segment 20 includes inner platform 22, outer platform 24, a pair of airfoils 26, and cooling baffles 28A-28D. In one embodiment, the vane segment 20 can be of a type suitable for use in a high pressure turbine (HPT) section of a gas turbine engine, and cooling openings 30 can be formed in selected locations on the vane segment 20 to direct a cooling fluid (e.g., bleed air) as desired. Inner platform 22, outer platform 24 and the airfoils 26 can each be formed as separate castings (e.g., from a nickel-based or cobalt-based superalloy), and then attached together by brazing or other suitable techniques. Conventional coatings (e.g., thermal barrier coatings) can be applied to some or all of the surfaces of vane segment 20.

In one embodiment, cooling baffles 28A- 28D are positioned to extend into hollow, interior portions of airfoils 26 and function to direct cooling air in a desired manner (e.g., for impingement cooling). Cooling baffles 28A- 28D are metallurgically bonded to the airfoils 26. In one embodiment, a plurality of tack welds metallurgically bond each cooling baffle 28A-28D to the interior of airfoils 26.

During use, the vane segment 20 may become damaged or worn. The damaged or worn vane segment 20 can be repaired according to the steps set forth herein to obtain a desired throat area for the turbine stage.

Vane segment 20, which may be repaired according to the method disclosed herein, has inner platform 22, outer platform 24, lead airfoil 26 and trailing airfoil 26. Prior to repair, lead airfoil 26 and trailing airfoil 26 are either cast as an integrated unit with one or more of inner platform 22 and outer platform 24, or are welded and/or brazed to one or more of inner platform 22 and outer platform 24. It should be noted that although illustrated as vane segment 20 having two airfoils 26, a vane segment can be comprised of any number of airfoils.

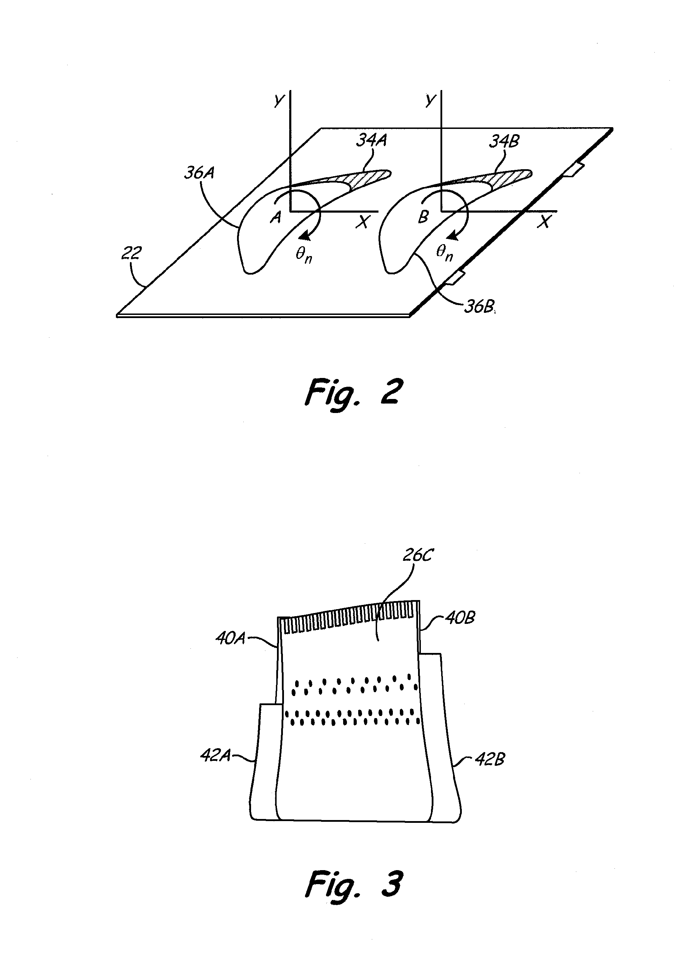

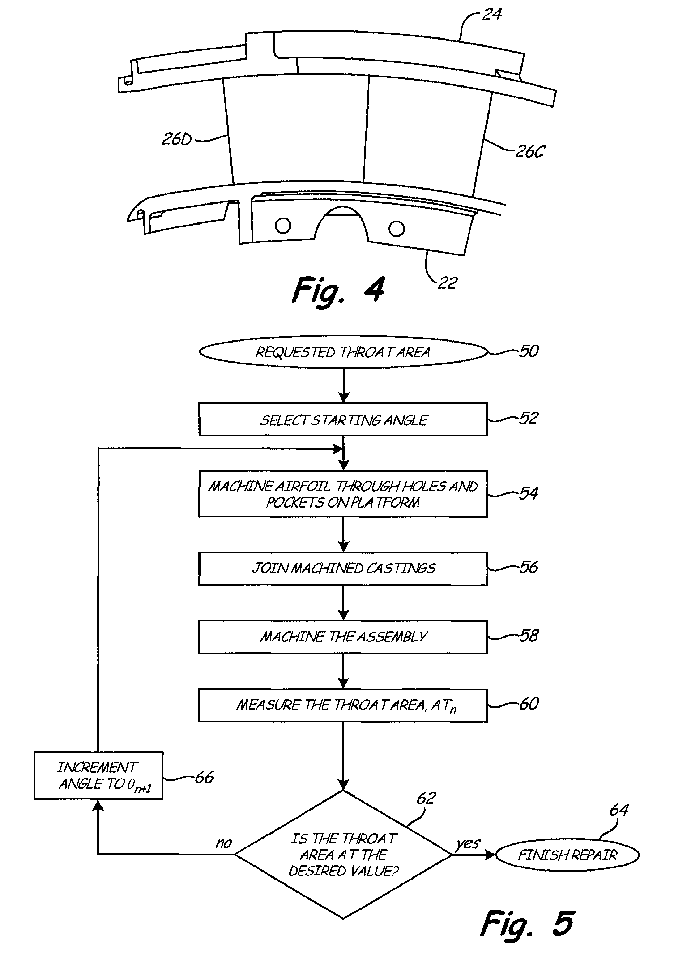

FIG. 2 is a plan view of a vane platform with pockets 34A and 34B cut through, and FIG. 3 is a plan view of a replacement airfoil 26C. FIG. 4 is a perspective view of a remanufactured turbine vane segment 20 that has platforms 22 and 24. In one embodiment, the airfoils of vane segment 20 are replaced with replacement airfoils 26C and 26D while retaining the engine run inner platform 22 and outer platform 24 that have been removed from the engine. Alternately, the entire segment is replaced with non-engine run parts for platforms 22 and 24 as well as at least one of replacement airfoils 26C and 26D. In one embodiment, cooling baffles 28A-28D are repositioned within the interior portions of replacement airfoils 26C and 26D.

Typically, vane segment 20 being retrofitted with replacement airfoils 26C and 26D is first subjected to treatment to strip existing coatings from the vane. Methods for stripping these coatings are known and include, for instance, an initial gritblast operation followed by immersion in a heated solution of 50% nitric/50% phosphoric acid. A subsequent gritblast after rinsing and drying the vanes can complete the removal of the coating. Depending on the specific coating being removed, additional cycles in other acids may be required.

Once the vane is stripped of coatings, airfoils 26 are separated from inner platform 22 and outer platform 24. Where the vane to be repaired is a component assembly vane, platforms 22 and 24 and airfoils 26 may be separated by heating the entire assembly to a temperature sufficient to melt the braze joints. Alternatively the airfoils can be cut from the vanes leaving airfoil stubs that will be machined away later. It should be noted that significant cracks in the platform, including cracks along the original mateface welds can be manually notched, prepared and welded prior to removing airfoils 26 from vane segment 20.

Once airfoils 26 are removed from platforms 22 and 24, the basic repair sequence for inner platform 22 and outer platform 24 is the same. Once platforms 22 and 24 are separated, a second welding operation may be performed to repair any remaining cracks in platforms 22 and 24. Known welding techniques such as TIG (tungsten inert gas) welding can be used. If necessary, airfoil stubs are then machined flush with the gaspath surface 40 on platforms 22 and 24. Machining can be accomplished, for example, by belt sanding any airfoil stubs.

Platforms 22 and 24 are then processed through a vacuum cleaning cycle which is used to prepare most types of turbine vanes for brazing operations. If the parts are not completely clean, braze will not flow properly, will not diffuse into the part and adhere properly, and will become contaminated. A suitable cleaning cycle includes first fluoride cleaning, which takes place in an atmospheric furnace wherein a chemical reaction takes place that reduces (breaks up) aluminum and titanium oxides on the vane surfaces and in exposed cracks. The next step is a hydrogen vacuum clean wherein the hydrogen gas acts to reduce chromium oxides to pure chromium. The final step is a vacuum clean cycle to pull any residual oxides (Al, Ti, Cr) from the surface of the parts, so that the parts are finally ready for braze.

In one embodiment, gaspath surfaces 32 are then brazed, using known techniques, to apply a layer of braze material to seal minor cracks in platforms 22 and 22, and seal cooling holes 30 to obtain a relatively smooth surface. Platforms 22 and 24 are then machined, using known machining processes (e.g. contour milling, automated belt sanding, manual belt sanding), to restore the correct, i.e. originally specified, contour to gaspath surfaces 32, and to restore platform dimensions as measured prior to the airfoil replacement operation. Gaspath contouring is easily automated using known automated machining techniques since platforms 22 and 24 are substantially smooth from the previous manufacturing operations.

In one embodiment, platforms 22 and 24 are then placed into an appropriate fixture in preparation for laser cladding of gaspath surfaces 32. Laser cladding is a welding operation which applies a surface to a base material in which the surface has mechanical properties matching those of the base material. Also, laser cladding can improve the mechanical properties of, i.e., strengthen, the surface of the base material by cladding the base material with an alloy or alloy mix having properties superior to those of the base material. In particular, gaspath surfaces 32 can be clad to improve the surface properties of platforms 22 and 24 beyond those of the platform base materials. At this point, platforms 22 and 24 are completely sealed with little or no evidence of there having previously been airfoils attached thereto or cooling holes therethrough.

Once sealed and laser clad, cooling holes 30 are then restored to platforms 22 and 24. Cooling hole restoration can be accomplished using known techniques such as, for example, by YAG laser drilling (step 30), or EDM (electro discharge machining). At this point, platforms 22 and 24 are ready to have airfoil pockets cut. If plugs have been inserted during previous operations to protect the airfoil openings, generally the entire plug area is cut out when cutting a new pocket and additional platform material is also removed. An EDM (electro discharge machining) machine is used to cut pockets 34A and 34B and through holes 36A and 36B for the new airfoils into precise locations on inner platform 22 and outer platform 24. Alternatively these pockets and through holes can be cut by laser. Pockets 34A and 34B support base 40A or 40B of replacement airfoil 26C or 26D, while through hole 36A or 36B receives extension 42A or 42B of replacement airfoil 26C or 26D. Through holes 36A and 36B are centered about respective x-axis and y-axis points A and B. The z-axis (not illustrated) corresponds to the stacking axis of replacement airfoils 26C and 26D. Points A and B act as points of rotation along the stacking axis, which is represented by angle Θ.

Because airfoil pockets 34A and 34B are cut into sealed platforms 22 and 24, airfoil pockets 34A and 34B can be repositioned on platforms 22 and 24 in a different location than during the original manufactured vane segment 20. This allows extreme flexibility such that different sized airfoils, as compared with the original airfoils, can be used, and the area can also be adjusted to optimize the performance of vane segment 20 within the turbine engine to achieve a desired throat area. By rotating angle Θ, different throat areas can be obtained for vane segment 20. The throat area is determined by a combination of airfoil spacing and the stacking angle determined by angle Θ.

Platforms 22 and 24 are then cleaned, and vane segment 20 is reassembled using newly cast (or refurbished) replacement airfoils. During vane reassembly, the replacement airfoils are placed into position using pockets 34A and 34B and tack welded into place. The replacement airfoils are permanently sealed into position in vane segment 20 by brazing them into place after the desired position has been finalized. Final machining and coating of vane segment 20 is performed to finish proper gaspath surfacing and other critical surfaces including the mate faces on each platform end, bolt flanges, top and bottom edges of the platforms, seals, etc.

FIG. 4 shows the an assembled vane segment 20 after replacement airfoil segments 26C and 26D have been tack welded to the platforms. In particular, lead airfoil 26C and trailing airfoil 26D are shown tack welded to inner platform 22 and outer platform 24 by airfoil tack welds.

The method of the present invention provides a comprehensively refurbished high-pressure turbine vane, produced at a significantly lower cost than a new vane segment. The component assembly vane allows significant modification from its original form, while minimizing the time the vane segment is out of service. Because new airfoil pockets 34A and 34B are cut into inner platform 22 and outer platform 24 to position replacement airfoils 26C and 26D, the area can be changed without modifying the contour of replacement airfoils 26C and 26D by adding or removing material from the airfoils as required in prior art vane repair methods. Rather, pockets 34A and 34B are modified to adjust the position of replacement airfoils 26C and 26D within the refurbished vane segment 20. Thus, the throat area of a nozzle can be determined and adjusted during the replacement.

FIG. 5 is a flow chart of a method for replacing a vane segment that has been removed from a gas turbine engine and replaced to meet a desired throat area. Initially, a desired throat area is determined (step 50), such as by request from a customer. Replacement airfoils and platforms are obtained. A selected angle Θ (see FIG. 2) for the stacking axis is obtained, typically equating to a zero point or zero angle (step 52). Through holes and pockets are then machined into the platforms at the selected angle Θ (step 54). Through hole machining may be done with a CNC (computer numerical control) machine with a specifically designed work holding fixture and machine programming that corresponds to a specific engine nozzle segment. Different programs are written to account for each different selected angle Θ. Similarly, machining for the pockets is done on a CNC machine with a specifically designed work holding fixture and electrode. Different electrodes may be utilized for different airfoil rotations relating to selected angle Θ.

The machined platforms and replacement airfoils are then joined to form a segment assembly (step 56). The platform and airfoil components are joined using a vacuum furnace brazing method, or the method detailed above. The assembly is machined to finished dimensions (step 58). A measurement is taken of the throat area of the finished vane segment (step 60). The throat area of the nozzle segment is measured with a commercially available open area gage.

The measurement is compared to the desired value (step 62). For example, the measured value is compared to the upper specification limit (USL) and the lower specification limit (LSL) set by the customer. If the measurement meets the requirements of the desired throat area, the part is finished (step 64). In one embodiment, cooling baffles are then attached to the interior of airfoils 26. If the measurement does not meet the desired throat area, selected angle Θ is modified (step 66). After modification, steps 54 through 62 and 66 (if necessary) are repeated until the measurement meets the requirements of the desired throat area. The steps are completed in increments of angle Θ, resulting in an angle Θₙ₊₁. For example, the increment may be in degree quarters (1/4°) between zero and one (Θ₁ = 0°; Θ₂ = 1/4°; Θ₃ = 1/2°; Θ₄ = 3/4°; Θ₁ = 1°). Specialized electrodes or other consumables may be built for each increment of angle Θ, and a new CNC program can be written for each increment. The electrodes and programming can be created from a model for each specific engine that will be the subject of the manufacturing process.

In one embodiment, the vane segment produced is in a range that is close to the LSL. If the customer requests that the throat area be adjusted closer to the USL, the CNC programming and electrodes are changed to meet the request. The aforementioned method allows for the manufacturing shop to match desired specifications given by the customer.

In another embodiment, an entire stage of an engine can be replaced with a mix of parts that include engine run components, stock components from the shelf, and components made according to the steps provided in FIG. 5. Similarly, the components manufactured according to the steps disclosed in FIG. 5 may be manufactured from engine run components (including repaired components as previously detailed), new castings, or a combination thereof.

While the invention has been described with reference to an exemplary embodiment(s), it will be understood by those skilled in the art that various changes may be made and equivalents may be substituted for elements thereof without departing from the scope of the invention defined by the attached claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for forming a nozzle segment (20) for a turbine stage of a gas turbine engine to a specific measurement range for a throat area, the nozzle segment comprising an inner platform (22), and outer platform (24), and a plurality of airfoils (26) between the inner platform and outer platform, the method comprising:
a) obtaining (50) a requested throat area measurement for the nozzle segment;
b) selecting (52) a starting stacking angle for a plurality of through holes and pockets corresponding to the airfoils for both the inner platform and outer platform;
c) machining (54) the plurality of through holes and pockets in the inner platform and outer platform;
d) assembling (56) the airfoils, inner platform, and outer platform to form the nozzle segment;
e) machining (58) the nozzle segment to obtain a finished throat area;
f) measuring (60) the finished throat area; and
g) determining (62) if the measured finish throat area complies with the requested throat area.

2. The method of claim 1, wherein if the measured finish throat area does not comply with the requested throat area, the method further comprising:
h) selecting (66) an incremental stacking angle for the plurality of through holes and pockets corresponding to the airfoils for both the inner platform and outer platform;
i) machining (54) the plurality of through holes and pockets in the inner platform and outer platform;
j) assembling (56) the airfoils, inner platform, and outer platform to form an incremental nozzle segment;
k) machining (58) the incremental nozzle segment to obtain an incremental finished throat area;
l) measuring (60) the incremental finished throat area; and
m) determining (62) if the measured incremental finish throat area complies with the requested throat area.

3. The method of claim 2, wherein if the measured incremental finish throat area does not comply with the requested throat area measurement, the method further comprising repeating steps h) - m) wherein selecting an incremental stacking angle is preferably done in 1/4° increments.

4. The method of claim 1, 2 or 3 wherein at least one of the airfoils (26), inner platform (22), and outer platform (24) comprises an engine run component.

5. The method of claim 4 further comprising:
remanufacturing the engine run component.

6. The method of any preceding claim wherein at least one of the airfoils, inner platform, and outer platform comprises a non-engine run component.

7. The method of any preceding claim wherein the requested throat area is a range between a lower specification limit and an upper specification limit, and wherein the finished throat area is preferably closer to the lower specification limit that the upper specification limit.

8. A method for forming a nozzle stage comprising:
replacing at least one nozzle segment (20) of the nozzle stage with a replacement nozzle segment comprising an inner platform (22), and outer platform (24), and a plurality of airfoils (26) between the inner platform and outer platform, the replacement nozzle segment manufactured by the method of any preceding claim.

9. The method of claim 8 further comprising:
replacing a plurality of nozzle segments (20) by the manufacturing process of steps a) - f).

10. The method of claim 8 or 9 further comprising:
replacing at least one other nozzle segment with a remanufactured component.

11. The method of claim 8, 9 or 10 further comprising:
replacing at least one other nozzle segment (20) with a non-engine run component.

12. A replacement nozzle vane segment for a gas turbine engine, the replacement nozzle vane segment comprising:
a non-engine run manufacturing component comprising:
an inner platform (22);
an outer platform (24); and
a plurality of airfoils (26) extending between the inner and outer platform, wherein the plurality of airfoils form a throat area;
wherein the throat area has a measurement that meets a first criteria different from a second criteria of a nozzle vane segment that is to be replaced.

13. The replacement nozzle vane segment of claim 12 wherein the inner platform (22), outer platform (24), and plurality of airfoils (26) are non-engine run components, or wherein at least one of the inner platform, outer platform, and plurality of airfoils is an engine run component.

14. The replacement nozzle vane segment of claim 12 or 13 further comprising:
a plurality of cooling baffles in the plurality of airfoils (26).

15. A high pressure turbine stage of a gas turbine engine that contains at least one replacement nozzle vane segment of claim 12, 13 or 14.
